# EUROPEAN PATENT SPECIFICATION

(11) **EP 1 681 622 B1**
(45) Date of publication and mention of the grant of the patent: **03.10.2007**
(21) Application number: 06009236.8
(22) Date of filing: 22.10.2004
(51) Int. Cl.: G06F 3/033

(54) **Handheld device for data input by a user**
Tragbare Vorrichtung zur Dateneingabe
Appareil portable pour l'entrée de données

(30) Priority: 22.10.2003 EP 03023975
(43) Date of publication of application: 19.07.2006
(62) Divisional of application: 04025178.7
(73) Proprietor: SONY DEUTSCHLAND GMBH, 10785 Berlin (DE)
(72) Inventor: Rapp, Stefan, 70327 Stuttgart (DE); Osen, Martin, 4563 Micheldorf (AT); Michelitsch, Georg, 70327 Stuttgart (DE)
(74) Representative: Körber, Martin Hans

(56) References cited:
- WO-A-93/14589
- US-A- 6 011 554

## Description

The present invention relates to a handheld device for data input by a user according to claim 1 and to a device for data input according to claim 2.

Recently, portable devices, such as mobile phones, PDAs, palms or the like, are gaining popularity. Further, these portable devices have to cover an increasing range of functionalities, comprising the input of data or the selection of functions within a menu. Therefore, a simple, quick and intuitive possibility of inputting data is needed.

Document US 6,011,542 discloses a graphical text entry system including a graphical text entry screen, preferably on a small electronic device, and a graphical text entry wheel displayed on the graphical text entry screen. A plurality of characters are positioned on the graphical text entry wheel. The system also includes a pointing device for rotating the graphical text entry wheel to allow a user to select one of the characters on the graphical text entry wheel to be entered. The selection is hereby accomplished by a selection device, such as a track ball or joy stick, positioned on the graphical text entry device.

Document US 4,726,687 discloses a time piece including a conventional circular analogue display surrounded by one or more data entry dials. Data selection means such as a pointer or a window are utilised to select one of a plurality of uncoded characters on the data entry dial thereby enabling an associated coded character formed on the periphery of a rotatable wheel to be read. A stem is positioned at the side of the time piece and is coupled to drive the wheel and also functions to enable the reading head to generate a data entry input signal. Hereby, the stem can be rotated in either direction about its longitudinal axis, can be pressed towards the case and can be pulled away from the case.

The disadvantage of the system is the implementation of the selection device or the stem into the device, as the device is either held in one hand, which makes the control of the selection device or stem difficult, or the device is held in one hand and the selection devices are operated with the other hand which depending on the size and position of the selection device or stem requires fine control of the fingers and makes it difficult to reach input data quickly and without any failure.

WO 93/14589 discloses a handheld device with the features of the preamble of claim 1.

It is therefore an object of the present invention to provide a device for data input, which is hahile and provides a simple, quick and intuitive way of inputting data.

The above object is achieved by a handheld device for data input by a user comprising a body adapted to be held by a user, a handle attached to and movable in relation to the body for the selection of symbols by a user, whereby the body and the handle have a common longitudinal axis and whereby the handle is moveable along the longitudinal axis of the device and rotatable around said longitudinal axis for scrolling through selectable symbols and for selecting a symbol, according to claim 1.

The above object is further achieved by a device for data input by a user comprising a body adapted to be fixed to an electronic equipment, a handle attached to and movable in relation to the body for the selection of symbols by a user, whereby the body and the handle have a common longitudinal axis and whereby the handle is moveable along the longitudinal axis of the device and rotatable around said longitudinal axis for scrolling through selectable symbols and for selecting a symbol, according to claim 2.

By using a handle which is attached to and movable in relation to a body a and by providing the body and the handle with a common longitudinal axis, the handling of the device is simplified as the form and handling of the device is simple and comfortable, the body and the handle can be easily held and gripped and the data can be quickly input by only moving the handle in a simple and intuitive way.

According to the invention as defined in claim 1 and 2, the area on the display corresponding to a symbol is changed in accordance with the probability of said symbol.

Preferably a larger area on the display corresponds to a more probable symbol and that a smaller area on the display corresponds to a less probable symbol.

In the following description, preferred embodiments of the present invention are explained in more detail in relation to the enclosed drawings, in which
Fig. 1 shows a schematic view of a handheld device according to the present invention,
Fig. 2 shows a schematic block diagram of a handheld device according to the present invention and
Fig. 3 shows a visualisation of a forcefield for inputting symbols according to an embodiment of the present invention.

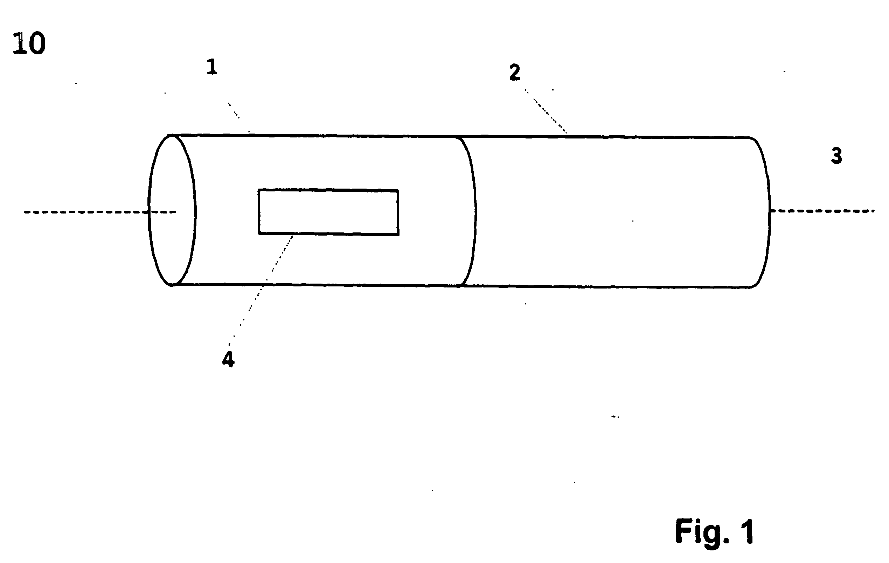

Fig. 1 shows a schematic view of the handheld device 10 according to the present invention. The device 10 consists of a body 1 and a handle 2, whereby the body 1 is adapted to be held by a user and the handle 2 is attached to the body 1 and moveable in relation to the body 1. The device 10 hereby has a longish, e.g. a cylindrical form, and a circular, oval, rectangular or any other cross-section. The longitudinal axis 3 of the device 10 is the axis of symmetry extending in direction of the longest extension of the device 10. The body 1 and the handle 2 have the common longitudinal axis 3 and the handle 2 is shiftable along the longitudinal axis 3 of the device 10 and rotatable around said longitudinal axis 3 of the device 10. Hereby, the user can hold the device 10 at the body 1 with one hand and move the handle 2 with the other hand, whereby the user can rotate the handle 2 clockwise or counter-clockwise or he can push or pull the handle 2. A display 4 integrated in the body 1 shows symbols, pictures, menus, names, phone numbers or the like.

It is to be noted, that the body 1 of the device 10 can also be fixed to an electronic equipment, e.g. a stereo system, a computer, a PDA or the like, thereby serving as an input means for the electronic equipment.

Hereby, the user for inputting or selecting data, information or text by moving the handle 2 is able to scroll through selectable symbols and to select a symbol, to scroll through a menu, names, phone numbers or the like, which are displayed on the display 4.

It is to be noted that the term "symbol" in the present case comprises alphabetic symbols, numeric symbols and/or every other possible symbol which can be displayed on the display 4 of a portable device 10. The present invention allows to scroll through and select symbols from a number of displayed symbols. Further, it is to be noted, that the scrolling and selection function of the device 10 can be also used for scrolling through a menu, a website, a phone or address book or a calendar and selecting a menu point, a name or a date, respectively.

The symbols are either arranged in a row or in a two-dimensional layout as explained below. By moving the handle 2, as in detail will be explained below, the user is able to scroll through the symbols and to select one or more symbols.

Hereby, the actual selectable symbol or the actual selectable sequence of symbols is highlighted and by scrolling through the symbols either the successive or the preceding symbol or sequence of symbols is highlighted. It is to be noted, that the term "highlighted" can mean that black symbols on a white background may be inverted into white symbols on a black background, the symbols may be shown bigger than the other symbols, the symbols may be displayed as bold or blinking symbols or the row of symbols may be shifted such that the highlighted symbol is the only symbol that is in line with the already previously selected symbols, or any other way of highlighting or marking sequences of symbols or a single symbol may be used.

In case the symbols are arranged in a row, the user in a first step scrolls through the symbols in a first or second direction, whereby scrolling means that either the symbol subsequent to the current selectable highlighted symbol is highlighted or the symbol precedent to the current selectable symbol is highlighted. Hereby, the first and second direction are opposed to each other, for example leftwards and rightwards or upwards and downwards. In a second step, the user can select the current selectable highlighted symbol, which means that the symbol is either stored, displayed or processed in a further step.

In case the symbols are arranged in a two-dimensional layout, then the symbols are not arranged in a straight line but are displaced from the line and located on a two-dimensional area on the display. Thereby, the order of the selectable symbols when scrolling through the symbols is the same as in the case when the symbols are arranged in a row.
If for example the symbols arranged in a row are shown on the display from top to bottom then the symbols arranged in a two-dimensional array will be partly dislocated to positions to the right or to the left of the row. When the user is scrolling through the symbols, then one symbol after the other from the top to the bottom or from the bottom to the top will be selectable independent of the rightward and leftward dislocation of the symbols.
An example for this may be the letters of the alphabet. When the letters are arranged in a row from the top to the bottom, then the row will start with a, b, c and so on. When scrolling trough the symbols, then first the letter a will be selectable, afterwards the letter b, then c and so on. In a two-dimensional layout for example the letter b may be positioned on the right hand side of the row and the letter c may be positioned on the left hand side of the row. When the user now is scrolling through the letters, then again first the letter a is selectable, then the letter b, then c and so on.

It is to he noted, that the above explained arrangement of the symbols in a two-dimensional layout is not limited to the arrangement of the row from the top to the bottom, hut may be any other arrangement. For example the row of symbols can be arranged from the right to the left and the symbols then are dislocated above or underneath of the row.

In a first embodiment of the present invention the function of the handle 2 is as follows: by rotating the handle 2 clockwise, the user can scroll through the row of symbols in the first direction, and by rotating the handle 2 counter-clockwise he can scroll through the row of symbols in the second opposite direction. When pushing the handle 2 the actual selectable highlighted symbol is selected and by pulling the handle 2 the last selected symbol is deleted or removed. Preferably, the row of selectable symbols are displayed according to the scrolling direction, that is from top to bottom or from bottom to top in the display. Accordingly, there can also be complete sequences of symbols interspersed between the row of symbols, e.g. if the device is used to enter English text, there might be the symbol sequence 't' 'h' 'e' sorted in between the 't' and 'u' to allow an easier input of frequent symbol sequences. As with the ordinary symbols, by rotating the handle 2 clockwise the user can scroll through the sequences of symbols in the first direction and by rotating the handle 2 counter-clockwise he can scroll through the sequences of symbols in the opposite second direction. By pushing the handle 2, the whole actual selectable highlighted sequence of symbols is selected. When pulling the handle 2, the last selected symbol is removed or deleted or the selection of a sequence of symbols is undone.
Hereby it is possible to invert the functions of pulling and pushing, that is selection is accomplished by pulling the handle and deletion is done by pushing the handle 2.

In a second embodiment, the scrolling through the symbols is achieved by pushing/pulling of the handle whereas rotating the handle selects or removes symbols. Hereby, the symbols on the display are displayed in two rows. Advantageously, the row of selectable symbols is displayed in the lower line of the display 4, and the already selected symbols in the line above. The user scrolls through the symbols in a first direction by pulling and, in the opposite second direction, by pushing the handle.
When the desired symbol is reached, it is selected by rotating the handle clockwise. The user can then scroll through the symbols again by pulling and pushing to select the next symbol. Alternatively, he can rotate the handle counter-clockwise which would then remove the previously selected symbol.

In a third embodiment the symbols arranged in a row or two-dimensional layout as explained above are selected in a combined operation of pulling, pushing and rotating the handle. Hereby, four operations are controlled by the handle 2, namely scrolling through the symbols in a first direction, scrolling through the symbols in a second direction opposite to said first direction, accelerating the selection and decelerating the selection. Each of these four operations is assigned to one of the four movements of the handle 2, that is rotating the handle 2 clockwise or counter-clockwise, pulling or pushing the handle 2. Preferably, scrolling in the first direction is accomplished by rotating the handle 2 clockwise, scrolling in the second direction by rotating the handle 2 counter-clockwise, accelerating the selection by pushing and decelerating the selection by pulling the handle 2. Hereby, pushing and pulling is not implemented in a discreet but continuous manner, as is known e.g. from analogue joysticks. As with joysticks, there is a neutral position in which no selection of symbols occurs. When the user lets go the handle 2, it is preferably drawn to and held in said neutral position by means of a mechanical spring system or equivalent. Thus, an unintended selection of symbols is avoided. The user accelerates the selection of symbols by pushing the handle 2 against the body 1, against the force of the spring system. The further he pushes, the faster is the selection of symbols. If he reduces the force, effectively pulling out the handle a bit, the speed in which symbols are selected is reduced up to the point where the neutral position is reached and no symbols are selected. By pulling the handle further out, previous selections are undone with increasing speed according to the degree to which the handle is pulled away from the device body.

Any other assignment of the movements of the handle 2 to the operations required for scrolling and selection is possible, such as rotating for accelerating/decelerating and pushing/pulling for selection.
Hereby, the symbols on the display are arranged in a row, preferably corresponding to the scrolling direction of the handle, and the process starts with highlighting automatically one symbol, e.g. if the symbols are letters in alphabetical order, the letter "a" is automatically highlighted at the beginning. In general, that is when the handle is not in the neutral position, after a certain time, the actual highlighted letter is automatically selected. The user within this time is able to scroll through the symbols by rotating the handle, e.g. to scroll to the letter "h", which then will be highlighted. After the time has passed, the actual highlighted letter, in the present example "h", will be selected. Further, the user is able to control the duration of the time period until the actual highlighted letter is selected by pulling and pushing the handle 2 as explained above, as pushing the handle 2 further, abbreviates the time period and accelerates the selection of the current highlighted symbols and pulling or pushing less firmly the handle 2 elongates the time period and decelerates the selection of the current highlighted symbol. As explained above, it is possible to not only decelerate the selection of the symbol by pulling the handle but also to undo the last selection, in this case the selection would not proceed but run backwards, once the handle is pulled over the neutral position.
In order to show the user the remaining time of the time period between the highlighting of a symbol and the automatic selection thereof after the time period has passed, different methods are possible. One possibility is to show the user graphically the remaining time, for example the actual highlighted symbol is constantly enlarged until its size reaches a predefined value. Or the row of symbols is moving on the display 4 in one direction, for example from the right to the left, and if the row has passed a marked point on the display 4, e.g. the middle of the display, the actual highlighted symbol is selected, and then again the row starts with the movement at the very right end of the display. This visualisation is the preferred one if sufficient screen space is available and a reasonably smooth transition can be achieved, as the users, by fixating the selected symbol have - through the symbol's position - a graphical feedback on when the symbol is accepted and they need to focus on the next symbol selection.
It is also possible to indicate the remaining time with contrast or colours, e.g. the highlighted symbol would have highest contrast just before selection occurs, then would be greyed, or would slightly turn from yellow over orange to red and be selected when becoming red. Already selected symbols could be rendered for example in blue. Another possibility would be a sound effect, for example a repeated tone or beep, whereby the frequency of repetition decreases or increases, or a tone which is getting louder, softer, higher or lower.
Also any combination of the above mentioned methods for showing the remaining time period to the user is possible.

In addition to sensing the movement of the handle 2 e.g. by optical sensors as found in optical computer mice or, for the first two embodiments, by traditional switches, it is possible to add sensing means in order to not only sense the position or direction of the movement of the handle 2 but to also sense the force which is applied by the user to move the handle 2. E.g. if the handle 2 is pushed more firmly against the body 1 then the symbols or sequences of symbols are stored, further processed, sent away, executed or the like. Or, if the handle is pulled more firmly away from the body 1, all symbols from the current point till the end are instantly removed.

Further and for all embodiments, it is possible to add detents or inverse detents into the handle mechanism in such a way that they work independently with respect to the two dimensions (rotating and pushing/pulling). In applying detents, the handle is locked in a certain position (along either of the two dimensions) and the user has to apply a force to the handle that exceeds a certain threshold to move the handle away from this position. An arrangement of such detents can be used, such that for every selectable symbol, a corresponding detent is made, and the handle snaps into predefined, corresponding positions. At the end of the range of selectable symbols, a hard stop can be implemented or the symbols can be arranged in a cyclic fashion that means, advancing over the last symbol results in moving to the first symbol.
Inverse detents have the effect that a certain force has to be exceeded in order to pass over a certain position. Such an effect is also known from older electric typewriters whereby pressing on a button results in typing of one letter and pressing more firmly on the button and thereby getting over the inverse detent, results in a repetitive sequence of that symbol being typed automatically. Inverse detents can be used to add additional functionality as above (but, through the haptic feedback, in a more favourable manner for the user), for example, if the user by rotating and pulling or pushing the handle 2 has selected a sequence of symbols or several symbols, then by a pushing of the handle beyond an inverse detent, the selected symbols are automatically processed in a further way, e.g. stored, transmitted or the like. Also for pulling, which normally deletes selected symbols one-by-one, when pulling more firmly over an inverse detent, all previously selected symbols will be removed at once.

The force feedback for aiding the user to distinguish between different pushing, pulling or rotation gestures as well as the detents, inverse detents and barriers during rotation, pulling or pushing are achieved by a force controlling means 8. The force controlling means can be realized by mechanical means such as springs and hard stops, or by an electric motor, electro rheologic fluids or magneto rheologic fluids. Also different kinds of detents or inverse detents can be made with different force profiles for the different symbols or functions. Such haptic feedback can be applied- to all three embodiments described above.

Also with all three embodiments, to further make the input of symbols more simple and quick for the user, a statistical function such as letter-n-gram models, symbol frequency counts, lexicons, symbol pair grammars or the like can be implemented and used in the following ways: it is possible to change the size of the highlighted selectable symbol either in width or in length or both in correspondence with the probability of that symbol, such that more probable symbols receive a wider area, and thus it is easier for the user to identify and select the most likely symbols. Also, the probability of a symbol can be coupled to the force feedback of the handle 2, such that more likely symbols are more easily reached when rotating or pulling or pushing the handle 2 or the different detents can be defined in a way, that the hand of the user is more attracted to positions related to more likely symbols.

Further, complete previous symbol inputs of the user can be used to update or adapt the statiscal function, so that symbol sequences frequently input by the user are more easily input or reached for the user either by again using force feedback, highlighting of the symbols or the like.

Specifically, with the second embodiment, where users scroll through the symbols by pulling and pushing the handle, besides the usage of the statistical function for scrolling among the symbols, i.e. the lower line, it is also possible to make use of the statistical function in the upper line that holds the already selected symbols. Here, the force feedback can attract the user's hand to positions of the selected symbols which are more likely erroneous as calculated by the statistical function. In the following, such a correction sequence is described: For switching from the lower to the upper line, the user has to rotate the handle clockwise from one detent in which he can scroll within the symbols, to another one in which he can move a cursor over the already selected symbols by pulling and pushing. It is possible to correct an error by exchanging, deleting or inserting symbols. Using different force levels during rotate operations can allow for these three different operations: When the erroneous symbol is selected in the upper line, a gentle counter clockwise rotation will switch to the lower line such that the symbol can be replaced by another one through push/pull actions upon which a gentle clockwise rotation puts the user back to the cursor movement mode. With a firm counter clockwise rotation, an insertion is triggered, that is, the next symbol that is selected from the lower line by push/pull action and a gentle clockwise rotation is inserted before the symbol on which the initial firm rotation occurred. Finally, when the user is in the upper line, selecting an erroneous symbol, he can also delete that symbol by a firm clockwise rotation.

Obviously, any combination of the above explained items can be done.

As already explained the probability of a symbol can either be represented visually as covering a larger or smaller area on the display or can be implemented haptically, that is by force feedback, in two different ways. The first variant is a passive force feedback, which can only be felt if the user starts moving the handle. As soon as the user releases the handle 2, it stops moving. During movement of the handle 2 the user may have to bring up different forces in order to continue the movement. The different forces hereby are applied to the handle (2) by the force controlling means (8). Technically, such behaviour is achieved by controllable brakes or retarding elements, for example by pressing two parts together and thus increasing friction, or with electro-rheologic fluids that change viscosity depending on an electic signal or the like. On the contrary, active feedback is guiding automatically to certain positions of the handle 2, that means, that even if the handle 2 is not being touched, it continues moving towards said certain position. For example if users move the handle directly over the inverse detent separating two symbols and let go the handle, it will move to either side until it reaches the center position of that symbol. Technically, such active forces can be produced by an electro-motor or another actuating element.

Depending on whether active or passive forces are used, different implementations of the force feedback are possible. For example, with active forces, larger/stronger detents will correspond to more likely symbols, less likely symbols will have smaller/weaker or even no detents. For passive forces, the handle has no or little friction while over a less likely symbol, and a higher friction when scrolling over a more likely symbol such that e.g. while spinning the handle in the clockwise direction, the handle will stop at the next highly probable symbol.

Yet another possibility to make use of the statistical function is, to not rank the probability of the symbols in distinct levels and successively switch to further levels discreetly, but in a continuous fashion, that is, to represent the symbols in a graphical arrangement according to their probability, whereby more likely symbols are rendered larger and/or more closely towards a selection line than less likely ones. Again then the users select a symbol by rotating the device and pushing or pulling the handle to such an extend that the desired symbol touches the selection line. As the more frequent symbols make up more space on the rotation axis and/or are closer to the selection line, they are more easily selected than the less frequent ones, making text entry easier for the users.

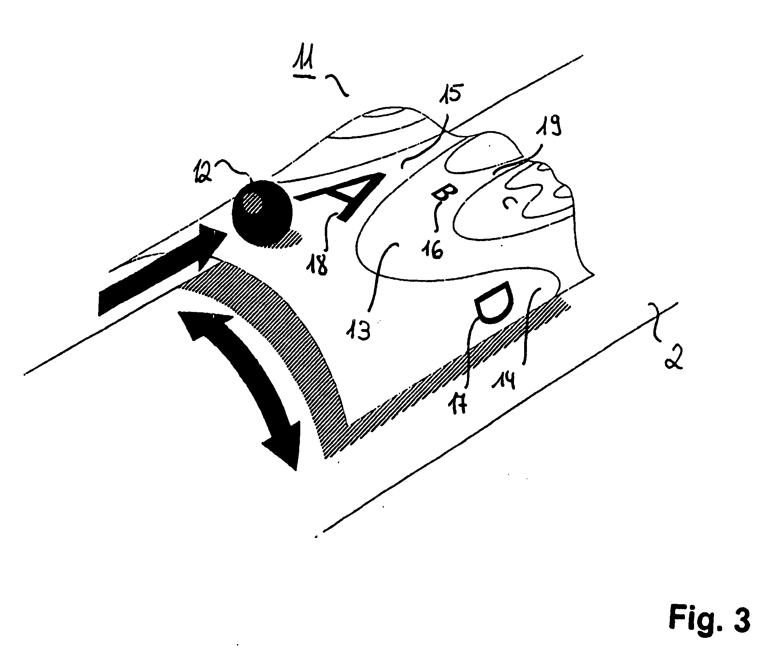

Preferably, the graphical representation is combined with an appropriate force feedback profile, that is, that users have to put more effort in reaching less likely symbols as they have with inputting more likely ones. Such an arrangement that also gives haptic feedback, i.e. feelable notches similar to the inverse detents, between symbols can be done by an arrangement of a force field as is visualised in Fig.3. The visualization can serve as a mental model for a user to understand the force field aspect, as well as a model for implementing the computer generated forces themselves. Here, the statistical function is transformed into a landscape 11 of hills and valleys, and the forces felt by the user correspond to the forces that affect the sphere 12. While selecting symbols, users feel the force that is needed to shift the sphere 12 up the hill. Scrolling to a similarly likely other symbol 17, by rotating the handle 2 is achieved by pushing the sphere 12 into the next, neighbouring valleys 14, and the forces affecting the sphere 12 are felt as the notch indicating to the user that another symbol is now selected. In order to select a less likely symbol 16 in between two more likely symbols 18, 17, users may balance the sphere 12 on the crest 13 between the two valleys 15, 14 corresponding to the more likely symbols 17, 18 until a small valley 19 appears for the less likely, but desired symbol 16. When a user has come thus far, the landscape is modelled in such a way that the valley representing the less likely symbol has a similar depth and breadth as the valleys for the more likely symbols. The users have, however already put more effort into getting there, as they would have when following one of the two valleys that lead to either of the more likely symbols. In doing so, more likely sequences of symbols are input with less effort as more likely ones, and the user's hand is gently guided towards more frequent sequences whilst still making it possible to enter less likely sequences without the need to explicitly switch modes.

For encoding the movement of the handle 2 in order to assign the movement to a certain symbol or function there are two possible implementations.
With the rate encoding the distance of the movement is measured. Hereby, the handle 2 has a neutral position and when not touched automatically returns to said neutral position. In this case the user is able to rotate, pull and push the handle 2 by starting from said neutral position and the further the user rotates, pulls or pushes the handle, the further and faster also the symbols are scrolled through. An example for the function of rate encoding is a joystick or a throttle of a car.
The second possibility is position encoding. Hereby, every position of the handle 2 during rotation and/or during pushing and pulling is assigned to a certain function or symbol. For example, the 360 degree of a rotation are divided into points having a distance to each other 10 degree and to each point is a letter of the alphabet assigned, e.g. "a" is at 10 degree, "b" at 20 degree, "c" at 30 degree and so on. In the same way also along the longitudinal axis 3 different positions are assigned to different symbols or functions. Also it is possible to have as many positions along the longitudinal axis as there are symbols selected, that is, for entering a 10 digit phone number, the user might use 10 distinct positions, i.e. rotate towards the appropriate digit, then pulls out the handle to the next position, rotates again, pulls out again etc. In this way, a fixed position relates to a certain elongation, e.g. the first symbol is at 3 mm, the second at 6 mm, the third at 9 mm and so on. Deleting a wrong number then is accomplished by pushing back in the handle a bit. With position encoding the symbols and functions obviously are limited to a certain number, but for some applications as for example choosing names or telephone numbers out of an address book this may be sufficient.

In order to adapt the device 10 also to left-handed persons , sensing means can be applied to the device 10, e.g. gyro-sensors and/or simple gravity base switches, to automatically sense the orientation of the device body 1. Thus it is possible to swap the display 4 top to down when the body I is held with the other hand, and the rotation directions are inverted. For languages or cultures supporting top-to-bottom writing systems also a vertical arrangement of the device 10 can be detected and the display 4 can he adjusted accordingly. For cultures with right-to-left writing order, the handle directions and the way in which selected symbols are displayed can also be adapted appropriately.

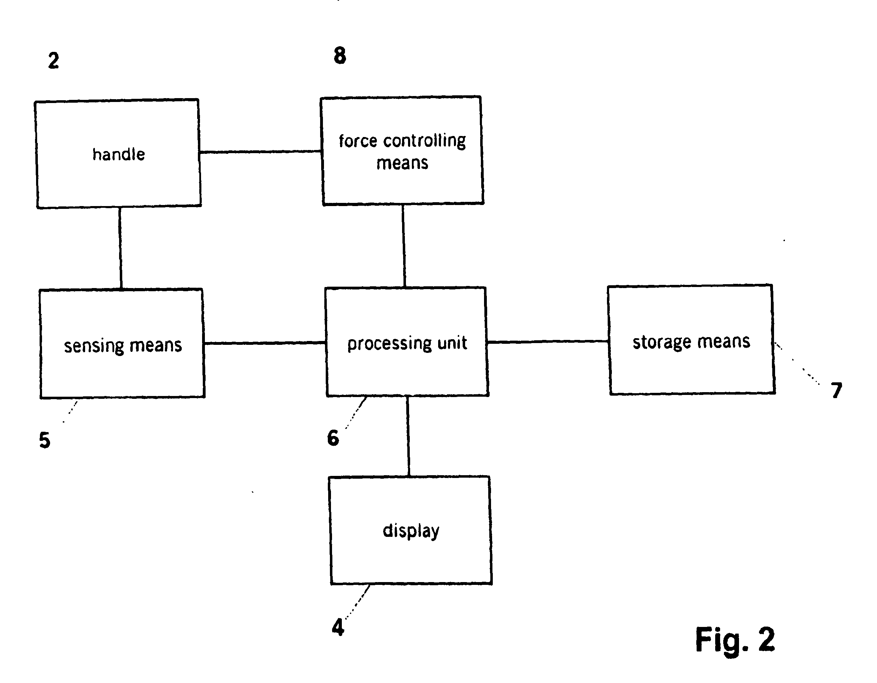

With reference to Fig. 2, the system of a device 10 according to the present invention is explained in more detail. As already explained above, the handle 2 is rotatable around or shiftable along the longitudinal axis 3. A sensing means 5 detects the position or movement of the handle 2 and if required also the force used by the user to move the handle 2. Further, the sensing means may also be able to detect the position of the body 1 of the device 10 in order to adapt the display 4 and the movements of the handle 2. The sensing means 5 submits the detected movements of the handle 2 or the orientation of the body 1 to a processing unit 6. The processing unit 6 is responsible for the conversion of the sensed movements into a data output on the display 4, e.g. of scrolling through symbols, highlighting symbols or showing menus or the like on the display 4. In addition, the device 10 comprises a force controlling means 8 for applying a certain force to the handle 2 when the user moves the handle 2. The force controlling means 8 is controlled by the processing unit 6. The force controlling means 8 may be a force exerting passive or active element such as an electric motor or an electrically controllable brake. Further, the processing unit 6 is responsible for the further processing of the selected symbols, e.g. the storage of the input text or data, the transmission to another remote or attached device, e.g. a second handheld device 10, a personal computer, a camera, a web server, an e-mail server or the like. A storage means 7 serves for the permanent or volatile storage of data, e.g. for the storage of the inventory of symbols, their order, the storage of the probabilities for the statistical model or the storage of input data or selected symbols by the user.

Main application areas of the device 10 may be the dialling of numbers, selecting names in a phone book, writing SMS or e-mails for mobile phone applications and the like, or for inputting general number, text, messages or notes, or the selection of content from a larger collection e.g. from a music player, a video player or an address selection. The device 10 is especially suitable for mobile devices that are too small to fit a keyboard on and that have a stick, a pen or torch-like shape. As the hands only need to do grip and turn/press movements, the input method can also work well with gloves or for people that have difficulties with fine control of their fingers. In principle it is also possible to support one part of the case with the palm of the hand, the ring finger and small finger, and manipulate the handle 2 with the thumb or index finger.

## Claims

1. Handheld device for data input by a user comprising
a body (1) adapted to be held by a user,
a handle (2) attached to and movable in relation to the body (1) for the selection of symbols by a user, and
a display (4) for displaying the selectable and selected symbols,
whereby the body (1) and the handle (2) have a common longitudinal axis (3) and
whereby the handle (2) is movable along the longitudinal axis (3) of the device (10) and rotatable around said longitudinal axis (3) for scrolling through selectable symbols and for selecting a symbol,
**characterised in,**
**that** the displaying mode of a symbol in the display (4) is changed depending on the statistical probability of said symbol, whereby the statistical probability depends on the current selectable symbol and at least the last selected symbol, and whereby the area on the display (4) corresponding to a symbol is changed in accordance with the probability of said symbol.

2. Device for data input by a user comprising
a body (1) adapted to be fixed to an electronic equipment, a handle (2) attached to and movable in relation to the body (1) for the selection of symbols by a user, and
a display (4) for displaying the selectable and selected symbols, whereby the body (1) and the handle (2) have a common longitudinal axis (3) and whereby the handle (2) is movable along the longitudinal axis (3) of the device (10) and rotatable around said longitudinal axis (3) for scrolling through selectable symbols and for selecting a symbol, and
whereby the displaying mode of a symbol in the display (4) is changed depending on the statistical probability of said symbol, whereby the statistical probability depends on the current selectable symbol and at least the last selected symbol, and whereby the area on the display (4) corresponding to a symbol is changed in accordance with the probability of said symbol.

3. Device according to claim 1 or 2,
**characterised in,**
**that** a larger area on the display (4) corresponds to a more probable symbol and **that** a smaller area on the display (4) corresponds to a less probable symbol.

## Patentansprüche

1. Tragbare Vorrichtung zur Dateneingabe durch einen Anwender, aufweisend
ein Gehäuse (1), das so angepasst ist, um von einem Anwender gehalten zu werden, einen Griff (2), der am Gehäuse (1) angebracht ist und diesem gegenüber bewegbar ist, zur Auswahl von Symbolen durch einen Anwender, und
eine Anzeige (4) zum Anzeigen der wählbaren und ausgewählten Symbole,
wobei das Gehäuse (1) und der Griff (2) eine gemeinsame Längsachse (3) aufweisen und
wobei der Griff (2) entlang der Längsachse (3) der Vorrichtung (10) bewegbar und um die Längsachse (3) drehbar ist, zum Scrollen durch wählbare Symbole und zum Auswählen eines Symbols,
**dadurch gekennzeichnet, dass**
der Anzeigemodus eines Symbols auf der Anzeige (4) in Abhängigkeit von der statistischen Wahrscheinlichkeit des Symbols verändert wird, wobei die statistische Wahrscheinlichkeit vom aktuellen wählbaren Symbol und wenigstens dem zuletzt ausgewählten Symbol abhängt, und wobei der Bereich auf der Anzeige (4), der einem Symbol entspricht, in Übereinstimmung mit der Wahrscheinlichkeit des Symbols verändert wird.

2. Vorrichtung zur Dateneingabe durch einen Anwender, aufweisend
ein Gehäuse (1), das so angepasst ist, um an eine elektronische Vorrichtung angebracht zu werden,
einen Griff (2), der am Gehäuse (1) angebracht ist und diesem gegenüber zur Auswahl von Symbolen durch einen Anwender bewegbar ist, und
eine Anzeige (4) zum Anzeigen der wählbaren und ausgewählten Symbole,
wobei das Gehäuse (1) und der Griff (2) eine gemeinsame Längsachse (3) aufweisen und
wobei der Griff (2) entlang der Längsachse (3) der Vorrichtung (10) bewegbar und um die Längsachse (3) drehbar ist, zum Scrollen durch die wählbare Symbole und zum Auswählen eines Symbols, und
wobei der Anzeigemodus eines Symbols auf der Anzeige (4) in Abhängigkeit von der statistischen Wahrscheinlichkeit des Symbols verändert wird, wobei die statistische Wahrscheinlichkeit vom aktuellen wählbaren Symbol abhängt und wenigstens dem zuletzt ausgewählten Symbol, und wobei der Bereich auf der Anzeige (4), der einem Symbol entspricht, in Übereinstimmung mit der Wahrscheinlichkeit des Symbols verändert wird.

3. Vorrichtung nach Anspruch 1 oder 2,
**dadurch gekennzeichnet, dass**
ein größerer Bereich auf der Anzeige (4) einem wahrscheinlicheren Symbol entspricht und dass ein kleinerer Bereich auf dem Display (4) einem weniger wahrscheinlichen Symbol entspricht.

## Revendications

1. Dispositif portable pour l'entrée de données par un utilisateur, comprenant :
un corps (1) adapté pour être tenu par un utilisateur ;
un manche (2), attaché à, et mobile par rapport au corps (1), pour la sélection de symboles par un utilisateur ; et
un afficheur (4) pour afficher les symboles sélectionnables et les symboles sélectionnés,
dans lequel le corps (1) et le manche (2) ont un axe longitudinal commun (3) ; et
dans lequel le manche (2) est mobile le long de l'axe longitudinal (3) du dispositif (10), et rotatif autour dudit axe longitudinal (3) pour se déplacer à travers les symboles sélectionnables et pour sélectionner un symbole,
**caractérisé en,**
**ce que** le mode d'affichage d'un symbole sur l'afficheur (4) change en fonction de la probabilité statistique dudit symbole, dans lequel la probabilité statistique dépend du symbole actuellement sélectionnable et au moins du dernier symbole sélectionné, et dans lequel la zone sur l'afficheur (4) qui correspond à un symbole change en accord avec la probabilité dudit symbole.

2. Dispositif pour l'entrée de données par un utilisateur, comprenant :
un corps (1) adapté pour être fixé à un équipement électronique ;
un manche (2), attaché à, et mobile par rapport au corps (1), pour la sélection de symboles par un utilisateur ; et
un afficheur (4) pour afficher les symboles sélectionnables et les symboles sélectionnés,
dans lequel le corps (1) et le manche (2) ont un axe longitudinal (3) commun, et dans lequel le manche (2) est mobile le long de l'axe longitudinal (3) du dispositif (10), et rotatif autour dudit axe longitudinal (3) pour se déplacer à travers les symboles sélectionnables et pour sélectionner un symbole ; et
dans lequel le mode d'affichage d'un symbole sur l'afficheur (4) change en fonction de la probabilité statistique dudit symbole, dans lequel la probabilité statistique dépend du symbole actuellement sélectionnable et au moins du dernier symbole sélectionné, et dans lequel la zone sur l'afficheur (4) qui correspond à un symbole change en accord avec la probabilité dudit symbole.

3. Dispositif selon la revendication 1 ou 2, **caractérisé en,**
**ce qu'**une zone de large dimension sur l'afficheur (4) correspond à un symbole de plus forte probabilité, et ce qu'une zone de moins large dimension sur l'afficheur (4) correspond à un symbole de moins forte probabilité.
